# EUROPEAN PATENT APPLICATION

(11) **EP 4 819 365 A1**
(43) Date of publication of application: **07.10.2026**
(21) Application number: 24897702.7
(22) Date of filing: 29.11.2024
(51) Int. Cl.: H01M 50/533, H01G 11/70, H01G 11/72, H01G 11/76, H01M 50/586, H01M 50/591

(54) **POWER STORAGE DEVICE**

(30) Priority: 30.11.2023 JP 2023202994; 30.11.2023 JP 2023203376
(71) Applicant: PANASONIC INTELLECTUAL PROPERTY MANAGEMENT CO., LTD., Kadoma-shi, Osaka 571-0057 (JP)
(72) Inventor: KOZUKI, Kiyomi, Kadoma-shi, Osaka 571-0057 (JP); SAKAMOTO, Shinichi, Kadoma-shi, Osaka 571-0057 (JP); SATO, Kasumi, Kadoma-shi, Osaka 571-0057 (JP); IHAMA, Masahiro, Kadoma-shi, Osaka 571-0057 (JP); GESHI, Shinya, Kadoma-shi, Osaka 571-0057 (JP)
(74) Representative: Eisenführ Speiser
(86) International application number: PCT/JP2024/042360
(87) International publication number: WO 2025/116021

(57) **Abstract**

Provided is a highly reliable power storage device. The present invention comprises an electrode body (14) in which a first electrode and a second electrode are laminated in a first direction with a separator (13) interposed therebetween, an exterior body (16) that accommodates the electrode body (14), and a first current collector plate that is connected to the first electrode. The first electrode has a distal-end portion that extends from an end portion of the second electrode in a second direction orthogonal to the first direction. The distal-end portion is bent in the first direction and is connected to the first current collector plate.

## Description

### TECHNICAL FIELD

The present disclosure relates to power storage devices, for example, batteries and capacitors.

### BACKGROUND

Conventionally, cylindrical secondary batteries, such as those described in Patent Literature 1, have been used as energy storage devices. This cylindrical secondary battery includes an electrode assembly in which a positive electrode and a negative electrode are wound via a separator, a bottomed cylindrical housing can that houses the electrode assembly, and a sealing assembly that seals the opening of the housing can. The positive electrode of the electrode assembly is electrically connected to the bottom surface of the sealing assembly via a positive electrode lead, whereas the negative electrode of the electrode assembly is electrically connected to the bottom of the housing can via a negative electrode lead.

### CITATION LIST

### PATENT LITERATURE

PATENT LITERATURE 1: Japanese Patent Application Publication No. 2000-048825

### SUMMARY

For power storage devices, it is demanded to further increase the capacity and output, and further improve reliability to stably charge and discharge under more severe environments. An object of the present disclosure is to provide a power storage device having a high reliability.

A power storage device according to the present disclosure includes an electrode assembly in which a first electrode and a second electrode are stacked in a first direction via separator, a housing body that houses the electrode assembly, and a first current collector plate connected to the first electrode. The first electrode includes an end portion that extends beyond an end of the second electrode in a second direction perpendicular to the first direction. The end portion is bent in the first direction and connected to the first current collector plate.

According to the power storage device of the present disclosure, a highly reliable power storage device can be provided.

### BRIEF DESCRIPTION OF DRAWINGS

[FIG. 1] is a sectional view of a battery taken along the axial direction according to an embodiment of the present disclosure.
[FIG. 2] is an enlarged sectional view of a joint portion between an electrode and an upper current collector plate.
[FIG. 3] is a sectional view of a battery taken along the axial direction according to an embodiment of the present disclosure.
[FIG. 4] is an enlarged sectional view of a joint portion between a positive electrode and an upper current collector plate.
[FIG. 5] is a diagram showing a state of a joint portion between an end portion of an exposed portion of a positive electrode core and a positive electrode current collector plate.
[FIG. 6] is a sectional view showing a state of a bend forming.

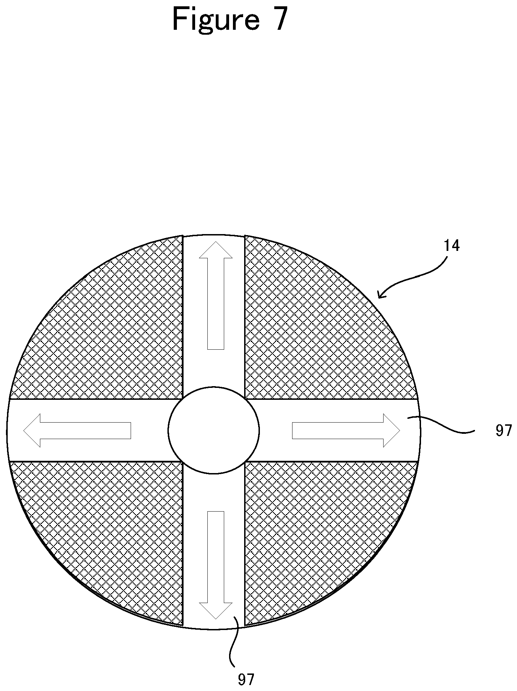

[FIG. 7] is a plan view used to describe bend directions.
[FIG. 8] is a plan view showing a state in which positive electrode current collector plates are joined to grooves of an electrode assembly.
[FIG. 9] is a sectional view showing a modification of an extended portion of a protective layer.
[FIG. 10] is a sectional view showing yet another modification of an extended portion of a protective layer.
[FIG. 11] is an enlarged sectional view of a joint portion between a positive electrode and an upper current collector plate.
[FIG. 12] is a diagram showing a bend state of an end portion of an exposed portion of a positive electrode core and a positive electrode current collector plate.
[FIG. 13] is a plan view showing bend directions of a bend forming.
[FIG. 14] is a plan view showing a state in which positive electrode current collector plates are joined to grooves of an electrode assembly.
[FIG. 15] is an enlarged sectional view of a joint portion between a positive electrode and an upper current collector plate in an embodiment including an extended portion of a protective layer.
[FIG. 16] is a sectional view taken along an axial direction of a battery according to an embodiment including an extended portion of a protective layer.

### DESCRIPTION OF EMBODIMENTS

With reference to the drawings, embodiments of a power storage device according to the present disclosure are described in detail below. The power storage device of the present disclosure may be an aqueous electrolyte secondary battery or a non-aqueous electrolyte secondary battery. The power storage device of the present disclosure may be a cylindrical battery that has a cylindrical (for example, bottomed cylindrical) housing can, a prismatic battery that has a prismatic housing can, or a pouch battery that has a housing body made of laminated sheets. In these batteries, the cylindrical housing can, the prismatic housing can, and laminated sheets form a housing body. Alternatively, the power storage device of the present disclosure may be a capacitor in which charging and discharging are repeated. Although the power storage device is described as a cylindrical secondary battery (a lithium-ion battery) using non-aqueous electrolyte as one embodiment, the power storage device of the present disclose is not limited to this embodiment.

When multiple embodiments and modifications are involved below, it is expected from the beginning to build a new embodiment by combining these features as required. In the embodiments below, the same reference numerals denote the same elements in the drawings and overlapping descriptions are omitted. Further, the drawings include diagrams in which the dimensional ratios of vertical and horizontal lengths and heights of respective elements are not necessarily consistent among drawings. In the present specification, "top" indicates the sealing assembly 17 side of the cylindrical battery 10 in the axial direction (height direction), whereas "bottom" indicates the bottom 68 side of the housing can 16 in the axial direction. The axial direction of the battery 10 coincides with the height direction of the electrode assembly. Among the elements described below, those not included in a dependent claim that define highest level concept are optional, and not essential. The axial upward direction is referred to as the first direction.

### <Battery Configuration>

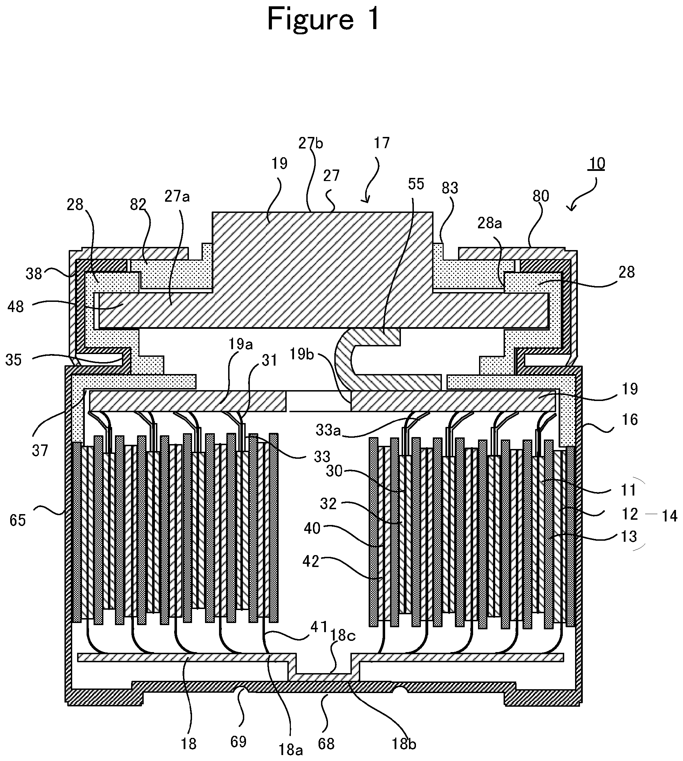

FIG. 1 is a sectional view of a battery 10 taken along an axial direction according to an embodiment of the power storage device according to the present disclosure. The battery 10 includes a wound-type electrode assembly 14, non-aqueous electrolyte (not shown), a bottomed cylindrical metal housing can 16 that houses the electrode assembly 14 and the non-aqueous electrolyte, and sealing assembly 17.

The electrode assembly 14 has a wound structure in which a band-shaped positive electrode 11 and a band-shaped negative electrode 12 are wound in the first direction via two of band-shaped separators 13. Alternatively, the electrode assembly according to the present disclosure may be a stacked type electrode assembly in which multiple sheets of the positive electrode and multiple sheets of the negative electrode are alternately stacked via sheets of separator in the first direction. The positive electrode forms the first electrode, whereas the negative electrode 12 forms the second electrode. It should be noted that in the power storage device of the present disclosure, the first electrode may be a negative electrode, whereas the second electrode may be a positive electrode. In this case, the end portion is formed for the negative electrode.

The non-aqueous electrolyte is ion-conductive (for example, lithium ion conductive). The non-aqueous electrolyte may be liquid electrolyte (electrolyte solvent) or solid electrolyte. The liquid electrolyte (electrolyte solvent) contains non-aqueous solvent and electrolyte salt dissolved in the non-aqueous solvent. As the non-aqueous solvent, for example, the following may be used: esters, ethers, nitriles, amides, and mixtures of two or more of these solvents. Examples of the non-aqueous solvents include ethylene carbonate (EC), ethyl methyl carbonate (EMC), dimethyl carbonate (DMC), diethyl carbonate (DEC), and mixtures of these solvents. The non-aqueous solvent may contain halogenated derivatives (e.g., fluorinated ethylene carbonates) in which the hydrogen atoms in these solvents are at least partially substituted with halogen atoms such as fluorine. As the electrolyte salt, lithium salt, such as LiPF₆, is used.

As the solid electrolyte, for example, a solid or gel polymer electrolyte, an inorganic solid electrolyte, or other electrolytes may be used. The polymer electrolyte may contain, for example, a lithium salt and a matrix polymer, or a non-aqueous solvent, a lithium salt, and a matrix polymer. As the matrix polymer, for example, a polymer material which gels upon absorbing a non-aqueous solvent may be used. As the polymer material, for example, a fluororesin, an acrylic resin, or a polyether resin may be used. As the inorganic solid electrolyte, for example, a material known for all-solid state lithium-ion secondary batteries (for example, oxide-based solid electrolytes, sulfide-based solid electrolytes, and halide-based solid electrolytes) is used.

The positive electrode 11 includes a positive electrode core 30 and positive electrode mixture layers 32 formed on both sides of the positive electrode core 30. The positive electrode core 30 forms the first core, whereas the positive electrode mixture layer 32 forms the first mixture layer. The positive electrode 11 includes a positive electrode exposed portion 31 with no positive electrode mixture layer 32 at one end of the positive electrode core 30 in a width direction. In the present embodiment, the positive electrode exposed portion 31 forms the end portion of the present disclosure. As the positive electrode core 30, a metal foil stable within the potential range of the positive electrode 11, such as aluminum or an aluminum alloy, or a film with the metal disposed on the top surface layer may be used. The positive electrode mixture layer 32 includes a positive electrode active material, a conductive agent, and a binder. The positive electrode 11 may be prepared, for example, by coating the positive electrode core 30 with a positive electrode mixture slurry that includes a positive electrode active material, a conductive agent, and a binder, drying the coating, and then performing compression to form the positive electrode mixture layers 32 on both sides of the positive electrode core 30. It should be noted that the positive electrode mixture layer may be formed only on one side of the positive electrode core. The positive electrode mixture layer may be prepared by bonding layered sheets on the positive electrode core. When bonding, a conductive adhesive agent containing conductive particles may be interposed between the positive electrode mixture layer and the positive electrode core.

The positive electrode active material includes a lithium-containing metal composite oxide as the main component. As the metal elements contained in the lithium-containing metal composite oxide, Ni, Co, Mn, Al, B, Mg, Ti, V, Cr, Fe, Cu, Zn, Ga, Sr, Zr, Nb, In, Sn, Ta, W, and others may be used. A preferred example of the lithium-containing metal composite oxide is a composite oxide containing at least one of Ni, Co, Mn, and Al.

Examples of the conductive agent contained in the positive electrode mixture layer 32 include a carbon material such as carbon black, acetylene black, Ketchen black, and graphite. Examples of the binder included in the positive electrode mixture layer include a fluororesin, such as polytetrafluoroethylene (PTFE) and polyvinylidene fluoride (PVdF), polyacrylonitrile (PAN), a polyimide resin, an acrylic resin, and a polyolefin resin. These resins may be used in combination with a cellulose derivative such as carboxymethyl cellulose (CMC) or its salts, polyethylene oxide (PEO), etc.

The negative electrode 12 includes a negative electrode core 40 and negative electrode mixture layers 42 formed on both sides of the negative electrode core 40. The negative electrode core 40 forms the second core, whereas the negative electrode mixture layer 42 forms the second mixture layer. The negative electrode 12 includes a negative electrode exposed portion 41 with no negative electrode mixture layer 42 at the other end of the negative electrode core 40 in the width direction. As the negative electrode core 40, a metal foil stable within the potential range of the negative electrode 12, such as copper or a copper alloy, or a film with the metal disposed on the top surface layer may be used. The negative electrode mixture layer 42 includes a negative electrode active material and a binder. The negative electrode 12 may be prepared, for example, by coating the negative electrode core 40 with a negative electrode mixture slurry that includes a negative electrode active material and a binder, drying the coating, and then performing compression to form the negative electrode mixture layers 42 on both sides of the negative electrode core 40. It should be noted that the negative electrode mixture layer may be formed only on one side of the negative electrode core. It is also possible to bond, on the negative core, a negative electrode mixture layer that has been already formed in a layer. When bonding, a conductive adhesive agent including conductive particles may be included between the negative electrode core and the negative electrode mixture layer.

As the negative electrode material, in general, a carbon material that reversibly absorbs and releases lithium ions is used. A preferable carbon material is graphite, such as natural graphite, for example, flake graphite, lump graphite, and earthy graphite, and artificial graphite, for example, lump artificial graphite and graphitized mesophase carbon microbeads. The negative electrode mixture layer may contain Si materials that contain silicon (Si), as the negative electrode active material. Further, the negative electrode active material may use metals that alloy with lithium, other than Si, alloys containing these metals, and compounds containing these metals.

Although the binder contained in the negative electrode mixture layer 42 may be a fluororesin, PAN, a polyimide resin, an acrylic resin, a polyolefin resin, or the like, as in the case of the positive electrode 11, it is preferable to use a styrene-butadiene rubber (SBR) or a modified product thereof. In addition to SBR or others, the negative electrode mixture layer may contain CMS or a salt thereof, polyacrylic acid (PAA) or a salt thereof, polyvinyl alcohol, or the like.

As the separator 13, a porous sheet having ion permeability and insulating property is used. Specific examples of the porous sheet include a microporous thin film, a woven fabric, and a nonwoven fabric. As the material of the separator 13, polyolefin resins, such as polyethylene and polypropylene, cellulose, or the like are preferable. The separator 13 may have a single-layer structure or a multi-layer structure. On a surface of the separator 13, a heat-resistant layer or the like may be formed.

The battery 10 includes a metal lower current collector plate (negative electrode current collector plate) 18 disposed lower than the electrode assembly 14 in the axial direction (the second direction perpendicular to the first direction). In the present embodiment, the lower current collector plate 18 is made of a metal such as copper, iron, nickel, a nickel alloy, and an alloy of these metals. In the present embodiment, the lower current collector plate 18 includes a disc-shaped base portion 18a, and a protruding portion 18b at the center of the base portion 18a. The protruding portion 18b protrudes downward and has a bottomed cylindrical shape. In the electrode assembly 14, the positive electrode 11 and the negative electrode 12 are wound in a state that they are offset from each other. In this wounding manner, the positive electrode exposed portion 31 and the negative electrode exposed portion 41 protrude at axially opposite ends. A laser beam is applied to the lower surface of the base portion 18a from below with the upper surface of the base portion 18a in a pressed state against the negative electrode exposed portion 41, which forms a lower axial end of the electrode assembly 14. This laser welding joins the negative electrode exposed portion 41 to the upper surface of the base portion 18a. Further, after placing a bottom plate 18c located at the end of the protruding portion 18b to be overlapped with the upper surface of a bottom plate 68 of the housing can 16, a laser beam is applied to the bottom plate 68 from below. This laser welding joins the lower current collector plate 18 to the bottom plate 68, electrically connecting the lower current collector plate 18 to the housing can 16.

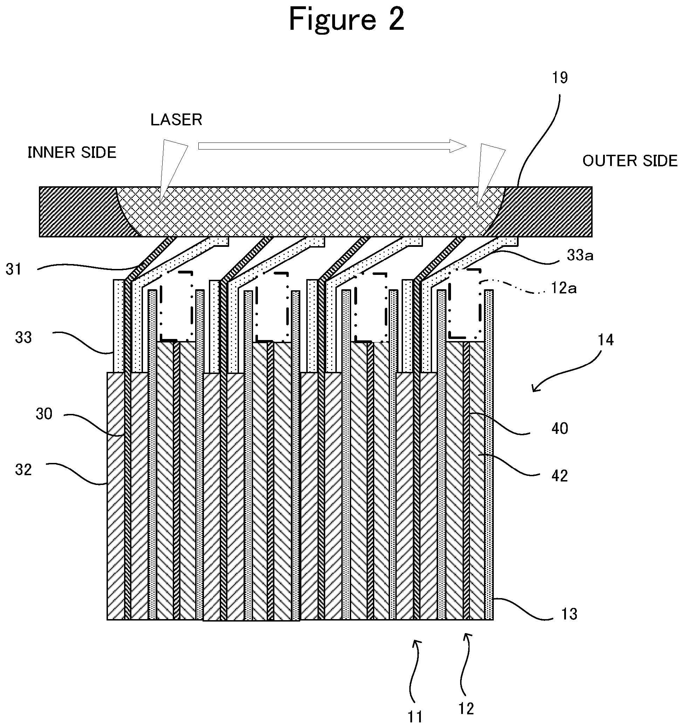

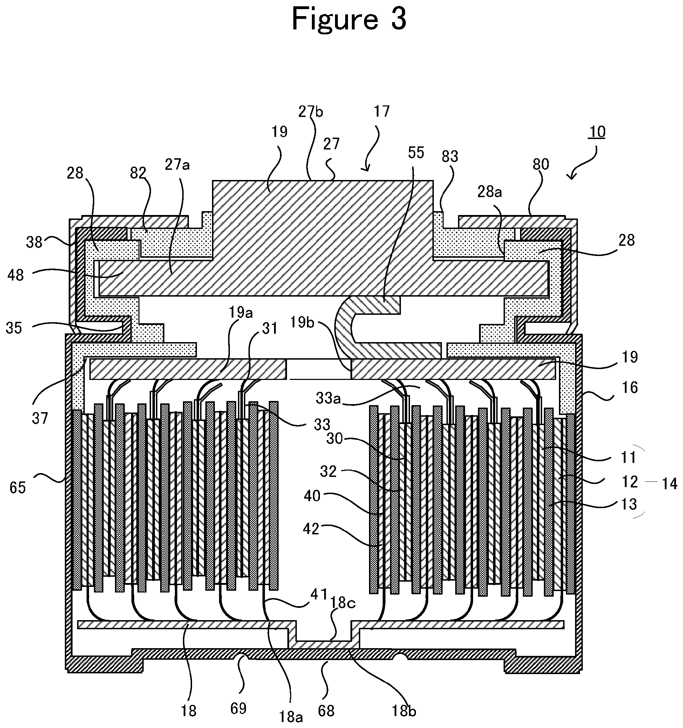

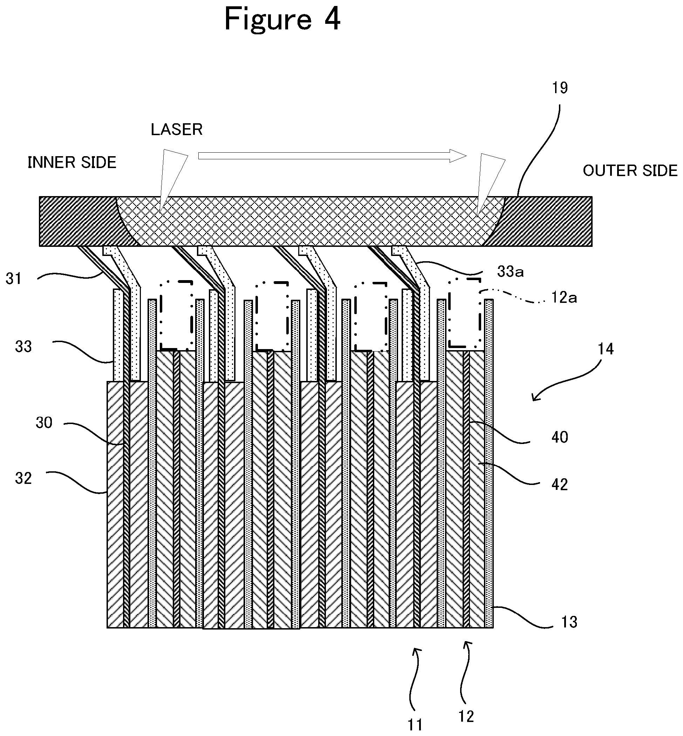

Although the negative electrode exposed portion 41 is bent toward the radially inner side in FIGs. 1 and 2, the negative electrode exposed portion 41 may be bent from the radially outer side to the inner side, similarly as the positive electrode exposed portion 31 as shown in FIGs. 3 and 4.

The case in which the negative electrode exposed portion 41 is electrically connected to the housing can 16 via the lower current collector plate 18 has been described. Alternatively, the negative electrode may be electrically connected to the housing can via one or more negative electrode leads extending from the bottom end of the electrode assembly. Further alternatively, the negative electrode may be electrically connected to the housing can by placing the negative electrode exposed portion disposed at the outermost circumferential surface of the electrode assembly in contact with the inner circumferential surface of the housing can in addition to or alternatively from the electrical connection to the housing can via one or more negative leads. Further, the negative electrode exposed portion 41 may be directly joined to the bottom plate of the housing can using laser or the like. The negative electrode exposed portion 41 may be joined to the lower current collector plate 18 with the negative electrode exposed portion 41 in a radially bent state. Still further, the negative electrode exposed portion 41 may be joined to the lower current collector plate 18 with the radially-aligned portions of the negative electrode exposed portion 41 in an overlapping state with each other.

The battery 10 includes a positive electrode current collector plate 19 (positive current collector plate) disposed on the axially upper side of the electrode assembly 14. The positive electrode current collector plate 19 is made of a metal such as aluminum and an aluminum alloy. The positive electrode current collector plate 19 includes a base portion 19a electrically connected to the positive electrode 11, and a through-hole 19b disposed at the center of the base portion 19a. A spacer 37 made of an insulating member is provided to prevent the connection between the positive electrode current collector plate 19 and the housing can 16. A laser beam is applied to the upper surface of the base portion 19a from above with the lower surface of the base portion 19a in a pressed state against the positive electrode exposed portion 31, which forms an upper end of the electrode assembly 14. This laser welding joins the positive electrode exposed portion 31 to the lower surface of the base portion 19a. It should be noted that the positive electrode exposed portion 31 forms the first exposed portion.

It should be noted here that an end portion of the positive electrode exposed portion 31 is bent in a radial direction (the first direction) in a bend forming and joined to the positive electrode current collector plate 19 with the end portion in a bent state in the radial direction. It should be noted here that the inside bent surface of the positive electrode exposed portion 31 is the first surface in the present disclosure, while the other surface on the opposite side of the first surface is the second surface. Further, the radially-aligned positive electrode exposed portions may be joined to the positive electrode current collector plate 19 with the radially-aligned positive electrode exposed portions in an overlapping state with each other.

A protective layer 33 is formed on the first surface and the second surface of the positive electrode exposed portion 31 near the end on the positive electrode mixture layer 32 side to prevent shortcut to an adjacent negative electrode 12. It should be noted here that the protective layer 33 formed on the first surface is a first protective layer and the protective layer 33 formed on the second surface is a second protective layer. Further, in the present embodiment, an extended portion 33a which is an extended portion of the protective layer 33 is formed on the first surface of the positive electrode exposed portion 31. This extended portion 33a can more reliably prevent a short circuit to the adjacent negative electrode 12.

In particular, in lithium-ion batteries, the negative electrode 12 may expand over charge-discharge cycles. For example, expanded portions 12a shown with broken lines in FIG. 2 may occur. In the present embodiment, because the extended portion 33a is provided, even when the positive electrode exposed portion 31 significantly tilts down, the positive electrode exposed portion 31 can be prevented from coming into contact with the expanded portion 12a, effectively avoiding the occurrence of a short circuit.

The configuration of the joint portion between the positive electrode exposed portion 31 and the positive electrode current collector plate 19 is described in detail further below.

A sealing assembly 17 includes a gasket 28 and a terminal cap 27. The terminal cap 27 is made of metal. The terminal cap 27 includes a disc-shaped base portion 27a and a projected portion 27b which includes, for example, a cylindrical projection. The base portion 27a of the terminal cap 27 may be connected to the upper surface of the base portion 19a of the positive electrode current collector plate 19 via a strip-shaped lead 55. Welding may be a method to join the lead 55, the base portion 27a, and base portion 19a. For example, the terminal cap 27 and the positive electrode current collector plate 19 are electrically connected by laser welding.

In general, the housing can 16 is made of an iron-based metal, for example, a material of a nickel-plated iron. The housing can 16 may be made of an aluminum-based metal. The housing can 16 includes a cylindrical portion 65 and the bottom plate 68. The cylindrical portion 65 includes an annularly grooved portion 35 and an annular shoulder portion 38. Th grooved portion 35 is formed by denting a part of the cylindrical portion 65 radially inward around the entire circumference by applying a spinning process. The shoulder portion 38 is formed when the upper end portion of the cylindrical portion 65 is bent radially inward and crimped to a circumferential edge portion 48 of the sealing assembly 17. The shoulder portion 38 extends radially inward at the upper end of the cylindrical portion 65.

The sealing assembly 17 is fixed to the housing can 16 by crimping and sandwiching the circumferential edge portion 48 of the terminal cap 27 between the shoulder portion 38 and the grooved portion 35 via the gasket 28. The gasket 28 functions as a sealing member to maintain airtightness inside the battery and as an insulation material to insulate between the housing can 16 and the sealing assembly 17. The gasket 28 is made of, for example, a polyolefin. The grooved portion 35 is formed at a position spaced a certain distance from the upper end of the housing can 16. The certain distance is, for example, 1 to 20% of the axial length of the housing can 16. The gasket 28 is compressed by the shoulder portion 38 and the grooved portion 35. The gasket 28 includes a protruding portion 28a, which protrudes radially inward from between the shoulder portion 38 and the sealing assembly 17.

The bottom plate 68 includes a thin easy-to-rupture portion 69. The easy-to-rupture portion 69 is provided by forming an annular or C-shaped stamped groove at the bottom surface of the bottom plate 68. If the battery 10 is abnormally heated such that the internal pressure of the battery 10 rises to a predetermined pressure, the easy-to-rupture portion 69 ruptures so that gas is discharged from the bottom plate 68. As this gas discharge prevents the bursting of the battery 10 due to the excessive increase of the inner pressure of the battery 10, the safety of the battery 10 can be increased.

The battery 10 further includes an annular metal plate 80 and an annular insulating plate 82 made of an insulating material. The metal plate 80 extends in substantially a radial direction. The metal plate 80 is joined to an upper surface of the shoulder portion 38. The terminal cap 27 to which the positive electrode exposed portion 31 is electrically connected via the positive electrode current collector plate 19 serves as a positive electrode terminal, whereas the metal plate 80 to which the negative electrode exposed portion 41 is electrically connected via the lower current collector plate 18 and the housing can 16 serves as a negative electrode terminal. The metal plate 80 is electrically connected to, for example, a current collector (not shown) which connects multiple batteries 10 in series or parallel, using tabs (leads). In this way, because the area which is connectable to the current collector can be increased, multiple batteries 10 can easily be electrically connected to the current collector.

The insulating plate 82 is interposed between the metal plate 80 and the sealing assembly 17 so that the metal plate 80 is insulated from the sealing assembly 17. The outer circumferential edge portion of the insulating plate 82 on the radially outer side may be located on the protruding portion 28a of the gasket 28 to be in contact with the gasket 28. In this way, the metal plate 80 is insulated from the sealing assembly 17 by the gasket 28 and the insulating plate 82. The insulating plate 82 includes a cylindrical portion 83 at the circumferential edge around a hollow portion of the insulating plate such that the cylindrical portion 83 surrounds the outer surface of the terminal cap 27. The cylindrical portion 83 continues to a radially inner end of the plate-shaped base portion of the insulating plate 82. It should be noted that the battery does not need to include the metal plate or the insulating plate.

### <Configuration of Joint Portion Between Positive Electrode and Upper Current Collector Plate (Positive Electrode Current Collector Plate)>

FIG. 2 is an enlarged cross section of a joint portion between the positive electrode 11 and the positive electrode current collector plate 19 (positive electrode current collector).

The positive electrode 11 includes a positive electrode core 30 and positive electrode mixture layers 32 coated on both sides of the positive electrode core 30. No positive electrode mixture layer 32 is formed on upper end of the positive electrode 11 in the width direction, forming the positive electrode exposed portion 31 which is an end portion in which the positive electrode core 30 is exposed. The end portion of the positive electrode exposed portion 31 of the positive electrode core 30 includes a bend portion in which the positive electrode core 30 is bent in a radius direction from an inner side (center side) to an outer side. The upper side of the end portion is joined to the positive electrode current collector plate 19.

The protective layers 33 are disposed above the upper end of the positive electrode mixture layer 32 on the first surface and the second surface of the positive electrode exposed portion 31. The protective layer 33 is formed from an insulating material whose melting point is higher than that of the positive electrode core 30. For example, alumina (aluminum oxide (Al₂O₃)) or other material is used for the protective layer 33. Alternatively, an inorganic oxide such as silica, zirconia, or titania may be used. It should be noted that the protective layer 33 is not necessarily provided on the second surface. The protective layer 33 on the first surface side does not necessarily extend continuously to the extended portion 33a from the boundary between the positive electrode mixture layer 32 and the positive electrode exposed portion 31. The protective layer 33 on the first surface may extend intermittently.

In particular, at the portion where the positive electrode exposed portion 31 is joined to the positive electrode current collector plate 19, the extended portion 33a of the protective layer 33 provided on the first surface branches away from the positive electrode exposed portion 31 such that they are separated from each other. The branched-away extended portion 33a is bent and extends independently from the positive electrode exposed portion 31. It becomes possible for the branched-away extended portion 33a to cover the joint portion (solidified portion) from below between the positive electrode exposed portion 31 and the positive electrode current collector plate 19, and the lower surface of the positive electrode current collector plate 19 after the positive electrode exposed portion 31 is joined to the positive electrode current collector plate 19 by forming the protective layer 33 formed on the first surface possibly closest (possibly longest) to an end portion extending from the positive electrode mixture layer on the first surface.

The protective layer 33 may be applied in paste by making particles, such as alumina, into a paste using a binder, such as a water-insoluble polymer. In the present embodiment, the amount of binder is relatively small. For example, the mass ratio relative to the mass of the particles may be 20%, 10%, 5% or less.

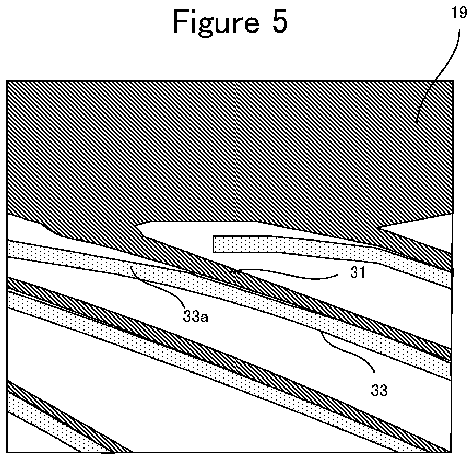

FIG. 5 is a diagram showing a state of the joint portion between the end portion of the positive electrode exposed portion 31 of the positive electrode core 30 and the positive electrode current collector plate 19. As shown, the end portion of the positive electrode exposed portion 31 is unified with the positive electrode current collector plate 19. Specifically, by irradiating the positive electrode current collector plate 19 with a laser, the positive electrode current collector plate 19 and the positive electrode exposed portion 31 in contact therewith are melted and unified.

### <Bend Forming>

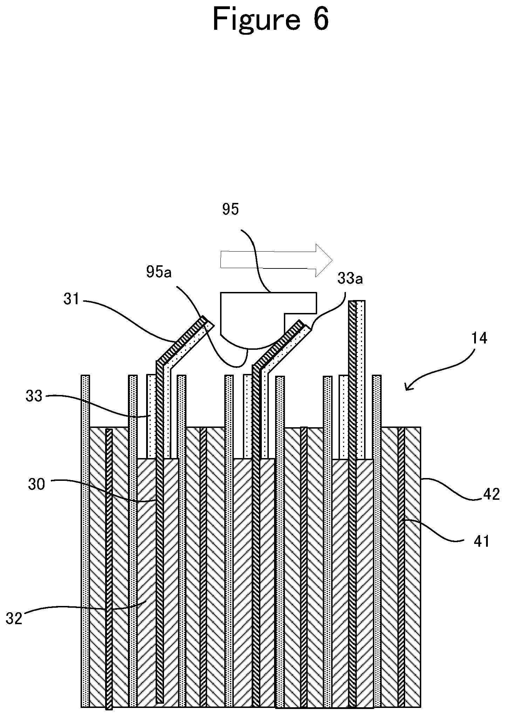

A bending process is applied to the wound electrode assembly 14. For example, as shown in FIG. 6, a tool having a curved bottom surface 95a is moved in a pressed state against the end portion of the positive electrode exposed portion 31. In this way, the portion of the positive electrode exposed portion 31 on which the protective layer 33 is formed and which is pressed by the tool 95 is bent.

Further, after applying this bending process, the positive electrode current collector plate 19 is irradiated with a laser with the positive electrode current collector plate 19 in a pressed state against the bent end portion of the positive electrode exposed portion 31. In this example, the laser has a shape of line corresponding to the width of the positive electrode current collector plate 19. The laser is moved in the longitudinal direction of the positive electrode current collector plate 19, in other words, in the radial direction of the electrode assembly 14.

In this way, the portion of the positive electrode current collector plate 19 irradiated with the laser undergoes temperature rise and is melted. Further, the positive electrode exposed portion 31 in contact with the positive electrode current collector plate 19 is also melted such that both are melted and unified. On this occasion, the melted portion of the positive electrode exposed portion 31 is attracted to the melted portion of the positive electrode current collector plate 19 such that a portion of the positive electrode exposed portion 31 branches away from the extended portion 33a because the melted portion of the positive electrode exposed portion 31 extends in a direction different from the extended portion 33a of the protective layer 33.

It should be noted here that the protective layer 33 is made of a high-melting-point material, such as alumina. As such, while the binder may be partially burned away, the protective layer 33 does not melt. The protective layer 33 thus remains as it is, separated from the positive electrode exposed portion 31.

Therefore, the protective layer 33 disposed between the positive electrode core 30 and the negative electrode can effectively prevent a short circuit between the positive electrode and the negative electrode.

### <Bend Direction>

Such a bend of the upper end of the positive electrode exposed portion 31 can be formed, for example, as shown in FIG. 6, by moving the tool 95 towards the outer circumferential side from the winding center. In this way, the positive electrode exposed portion 31 and the extended portion 33a corresponding to the width of the tool 95 (the dimension perpendicular to the travel direction) are bend-formed. On this occasion, the surface of the positive electrode exposed portion 31 on the outer circumferential side is the first surface. Four grooved portions 97 are formed in the electrode assembly 14 through a radial bend-forming. It should be noted that the tool may be moved from the radially outer side to the radially inner side of the electrode assembly such that the positive electrode exposed portion of the present disclosure is bent radially inward in the wound electrode assembly. In this case, the surface on the radially inner side becomes the first surface.

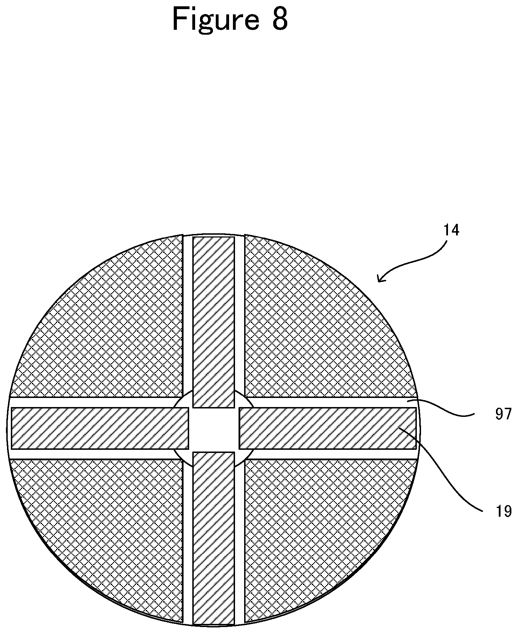

After the completion of this bend forming, a laser welding is applied to the grooved portions 97 from above with the positive electrode current collector plate 19 in a pressed state. FIG. 8 is a plan-view diagram showing a state after the upper current collector plate 19 has been laser welded. Four upper current collector plates 19 are attached to the grooved portions 97.

It should be noted here that when the positive electrode exposed portion 31 of the positive electrode core 30 of the electrode assembly 14 in a wound state is bent from the winding outer circumference towards the center, variations occur in how the positive electrode exposed portion 31 is bent, because while the positive electrode exposed portion 31 on the outer circumferential side with a lower curvature is easy to be bent, the positive electrode exposed portion 31 is pulled as the curvature increases towards the inner side. If a load is applied during the laser welding to the current collector plate in a state with variations in the bend manner between the inner side and the outer side, as the foil on the outer side easily bends from the root, the distance from the expanded negative electrode becomes shorter, causing a risk of a short circuit.

By starting bending from the inner circumference having a higher curvature (by applying a load enough for bending on the inner circumferential side by the tool), a uniform bend to the outer circumferential side becomes possible. Regarding the positive electrode core 30, by maintaining a uniformly bent shape among the inner circumferential side and the outer circumferential side, it becomes possible to maintain a distance from the expanded negative electrode 12 without being bent from the root even when a load is applied to the positive electrode core 30 during being welded to the positive electrode current collector plate 19, avoiding the risk of a short circuit.

### <Location of Protective Layer>

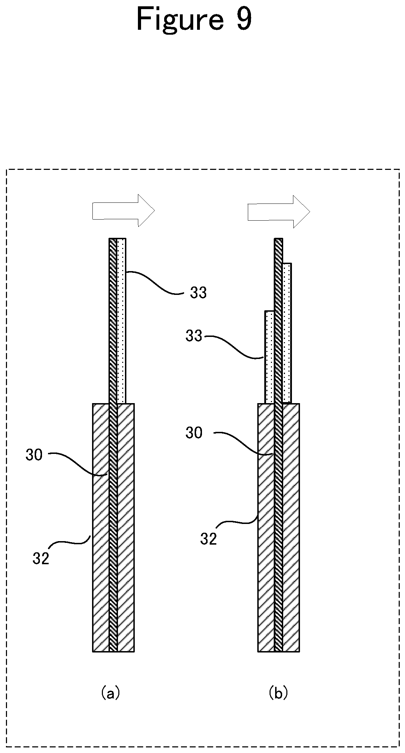

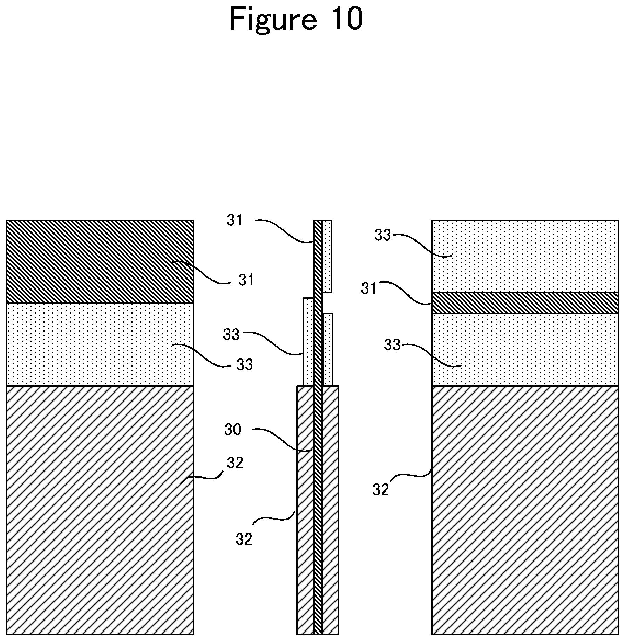

FIGs. 9(a), 9(b), and 10 show variations of the protective layer 33. In FIG. 9(a), the protective layer 33 is provided only on one side of the positive electrode core 30, which is on the inner side of the bending direction. In FIG. 9(b), the protective layer 33 on the inner side of the positive electrode core 30 on the inner side of the bending direction has a length slightly shorter than the positive electrode core 30 such that a region in which a positive electrode exposed portion is exposed is formed closer to the end of the positive electrode exposed portion than the region in which the protective layer on the second surface is formed. This configuration can maintain the joint region with the positive electrode collector plate on the second surface of the positive electrode exposed portion, while effectively insulating the second surface from surroundings. In FIG. 10, the protective layer 33 on the inner side of the positive electrode core 30 in the bending direction is configured to have a strip pattern in the vertical direction (the width direction and the axial direction). By providing a region with the protective layer and another region without the protective layer (or a region with the protective layer thinner than the other regions) on the first surface and the second surface of the positive electrode exposed portion, the rigidity within the positive electrode exposed portion can be non-uniform. The non-uniform rigidity can control the bending start point of the positive electrode exposed portion.

These configurations can effectively prevent a short circuit similarly to the embodiments described above.

It should be noted here that the electrode assembly 14 is housed in the housing can 16 in a cylindrically wound state, and the protective layer 33 can be formed before or after the winding. In the present embodiment, the protective layer 33 is formed before the winding. For example, the protective layer 33 can be formed at the same time as coating the positive electrode mixture layer 32 on the positive electrode core 30. Also regarding the negative electrode 12, the negative electrode mixture layer 42 is coated on the negative electrode core 40. Winding is performed with the separator 13 interposed between the positive electrode 11 and the negative electrode 12.

### <Configuration of Joint Portion between Positive Electrode and Upper Current Collector Plate (Positive Electrode Current Collector Plate)>

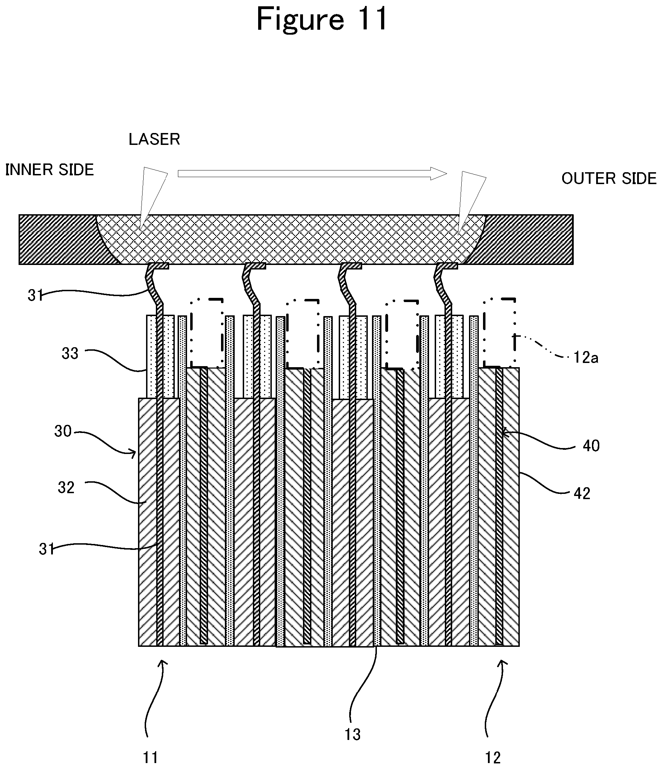

FIG. 11 is an enlarged cross section of a joint portion between the positive electrode 11 and the upper current collector plate 19 (positive electrode current collector plate).

The positive electrode 11 includes the positive electrode core 30 and the positive electrode mixture layers 32 coated on both sides thereof. In the width direction (axial direction) of the positive electrode 11, the positive electrode mixture layer 32 is not formed at the upper end portion to form the positive electrode exposed portion 31 in which the positive electrode core 30 is exposed. The end portion of the positive electrode exposed portion 31 includes a bend portion (first bend portion) which is bent from the inner side (center side) to the outer side, in other words, radially outward. The upper side of the end portion is joined to the positive electrode current collector plate 19.

The protective layers 33 are disposed on the first and second surfaces of the positive electrode exposed portion 31 for a certain distance (about half the distance to the positive electrode current collector plate 19) from the upper end of the positive electrode mixture layer 32. This protective layer 33 is made of an insulating material in which an inorganic filler is mixed in a water-insoluble polymer. As the inorganic filler, inorganic oxides, such as alumina (aluminum oxide (Al₂O₃)), silica, zirconia, and titania can be used. Further, it is preferable that the protective layer 33 has a melting point higher than that of the positive electrode core 30 to avoid the protective layer 33 from melting when the positive electrode core 30 and the positive electrode current collector plate 19 are laser welded.

### <Bend Forming>

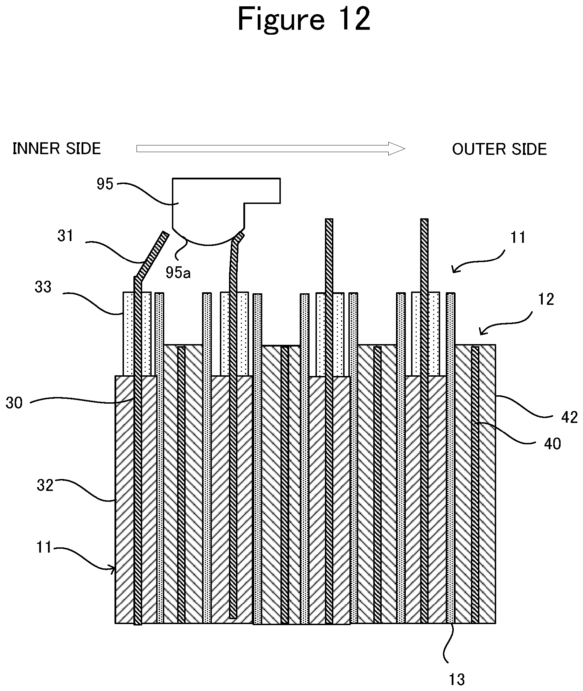

A bending process is applied to the wound electrode assembly 14. For example, as shown in FIG. 12, the tool 95 having a curved bottom surface 95a is moved in a pressed state against the end portion of the positive electrode exposed portion 31. In this way, the portion of the positive electrode exposed portion 31 on which the protective layer 33 is formed and which is pressed by the tool 95 is bent.

Further, after applying this bending process, the upper electrode current collector plate 19 is irradiated with a laser with the upper current collector plate 19 in a pressed state against the bent end portion of the positive electrode exposed portion 31. In this example, the laser has a shape of line corresponding to the width of the upper current collector plate 19. The laser is moved along the longitudinal direction of the upper current collector plate 19, in other words, in the radial direction of the electrode assembly 14.

In this way, the portion of the upper current collector plate 19 irradiated with the laser undergoes temperature rise and is melted. Further, the positive electrode exposed portion 31 in contact with the positive electrode current collector plate 19 is also melted such that both are melted and unified.

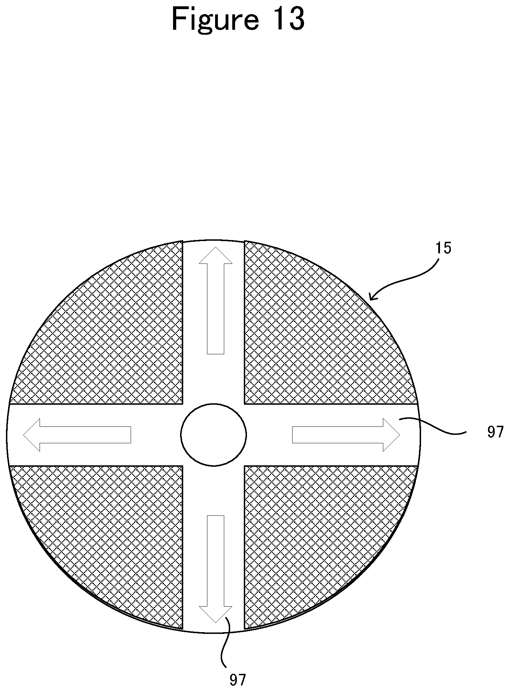

Such a bend of the upper end of the positive electrode exposed portion 31 can be formed, for example, as shown in FIG. 13, by moving the tool 95 towards the outer circumferential side from the winding center.

In this way, the positive electrode exposed portion 31corresponding to the width of the tool 95 (the dimension perpendicular to the travel direction) are bend-formed. Four grooved portions 97 recessed compared to the surroundings are formed in the electrode assembly 14 through a radial bend-forming.

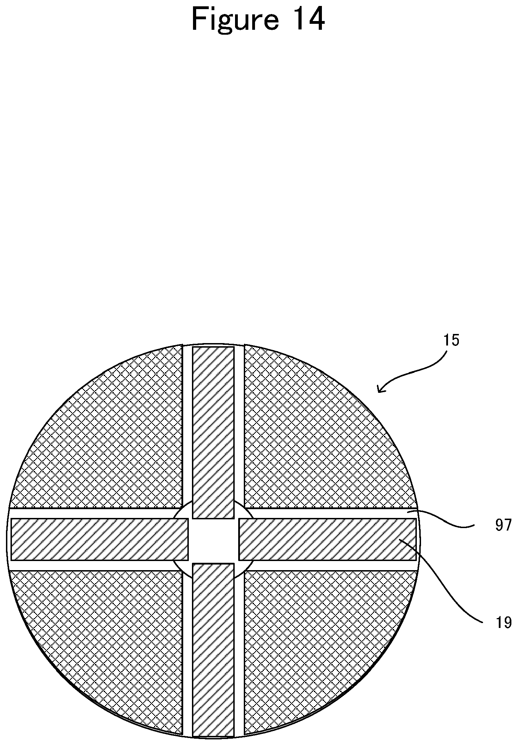

After the completion of this bend forming, a laser welding is applied to the grooved portions 97 from above with the upper current collector plate 19 in a pressed state. FIG. 14 is a plan-view diagram showing a state after the upper current collector plate 19 has been laser welded. Four upper current collector plates 19 are attached in the grooved portions 97.

### <Bend Direction>

It should be noted here that when the exposed portion 31 of the positive electrode core 30 of the electrode assembly 14 in a wound state is bent from the winding outer circumference towards the center, variations occur in how the positive electrode exposed portion 31 is bent, because while the positive electrode exposed portion 31 on the outer circumferential side with a lower curvature is easy to be bent, the positive electrode exposed portion 31 is pulled as the curvature increases towards the inner side. If a load is applied during the laser welding to the current collector plate in a state with variations in the bend manner between the inner side and the outer side, as the foil on the outer side easily bends from the root, the distance from the expanded negative electrode becomes shorter, causing a risk of short circuit.

In the present embodiment, by start bending from the inner circumference having a higher curvature, a uniform bend toward the outer circumferential side becomes possible. Regarding the positive electrode core 30, because it becomes possible to maintain a distance from the expanded negative electrode 12 because the positive electrode core 30 does not bend from the root even when a load is applied to the positive electrode core 30 during being welded to the upper current collector plate 19 by maintaining a uniformly-bent shape among the inner circumferential side and the outer circumferential side, the risk of short circuit can be reduced. Further, the positive electrode exposed portion can be more uniformly in contact with the current collector plate by providing a second bend portion, which is inwardly bent, on the mixture layer side relative to the first bend portion, which is outwardly bent, in the extending direction of the positive electrode exposed portion. Further, because the protective layer is formed on the mixture layer side relative to the second bend portion, this protective layer can increase the rigidity of the positive electrode exposed portion in the region where the protective layer is formed. With the increased rigidity, it becomes easier to provide the starting point of the second bend portion at an upper point (outside the electrode assembly) of the positive electrode exposed portion with no protective layer formed. For this reason, it is preferable that the protective layer extends outside relative to the end of the negative electrode in the axial direction. Further, the welding reliability increases when the first bend portions are arranged overlapped with each other in a radial direction in a cross section.

### <Extension of Protective layer>

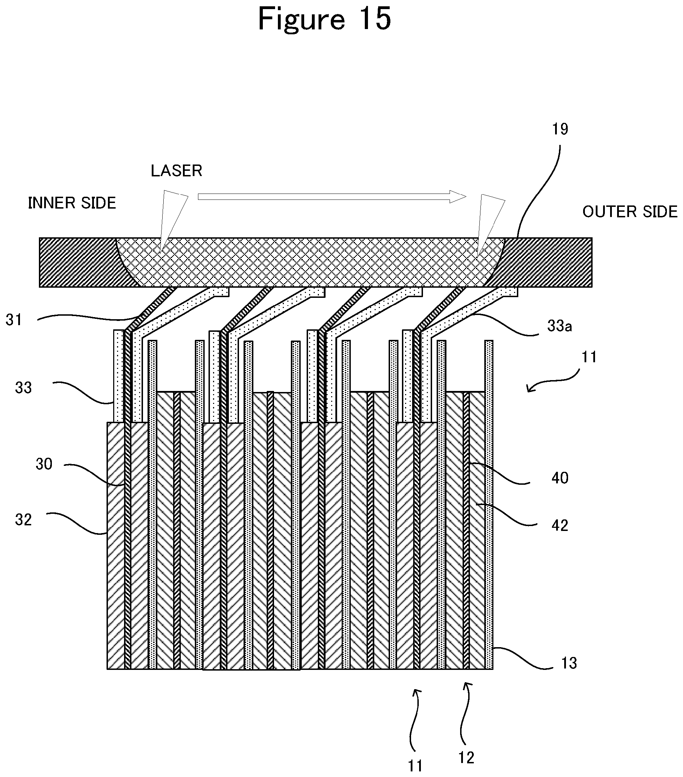

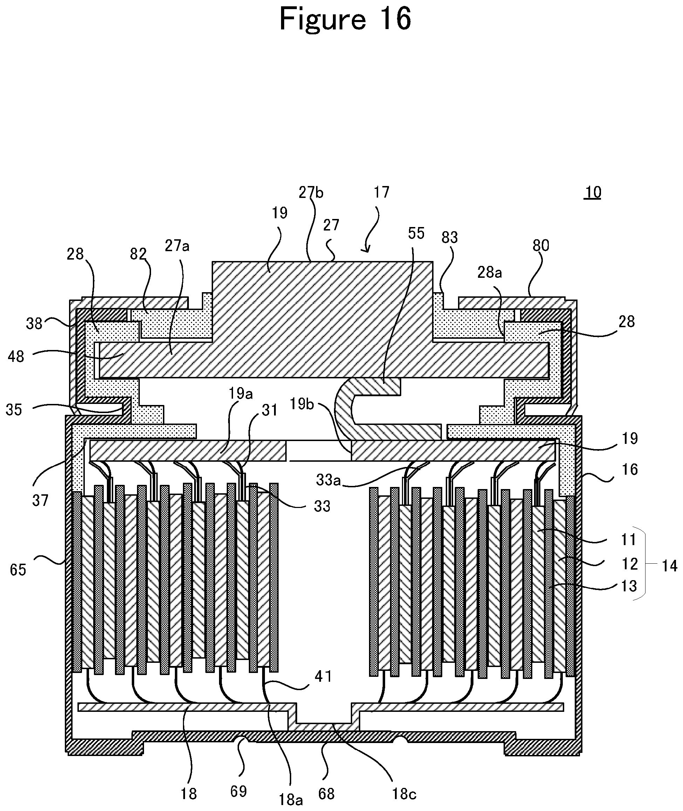

FIG. 15 shows a state during a laser welding according to another embodiment, while FIG. 16 shows an entire configuration of a battery when this configuration is applied.

The extended portion 33a which is an extended portion of the protective layer 33 is formed below the bend portion of the positive electrode exposed portion 31 at the end.

As described above, the extended portion 33a of the protective layer 33 branches away from the first surface of the positive electrode exposed portion 31 and separated from each other at the joint portion to the upper current collector plate 19 of the positive electrode exposed portion 31. This is achievable because of reasons such as the extended portion 33a does not melt during the laser welding.

As described above, the presence of the extended portion 33a enables a reliable prevention of a short circuit with the adjacent negative electrode 12. Further, in this embodiment, the protective layer 33 has a melting point higher than that of the positive electrode core 30.

### REFERENCE SIGNS LIST

10 battery, 11 positive electrode, 12 negative electrode, 12a expanded portion, 13 separator, 14 electrode assembly, 16 housing can, 17 sealing assembly, 18 lower current collector plate, 19 positive electrode current collector plate (upper current collector), 27 terminal cap, 28 gasket, 30 positive electrode core, 31 positive electrode exposed portion (end portion), 32 positive electrode mixture layer, 33 protective layer (first protective layer, second protective layer), 33a extended portion, 35 grooved portion, 37 spacer, 38 shoulder portion, 40 negative electrode core, 41 negative electrode exposed portion, 42 negative electrode mixture layer, 48 circumferential edge portion, 55 lead, 65 cylindrical portion, 68 bottom plate, 69 easy-to-rupture portion, 80 metal plate, 82 insulating plate, 83 cylindrical portion, 95 tool, 95a bottom surface, and 97 grooved portion.

## Claims

1. A power storage device comprising:
an electrode assembly in which a first electrode and a second electrode are stacked in a first direction via a separator;
a housing body that houses the electrode assembly; and
a first current collector plate connected to the first electrode,
wherein the first electrode comprises an end portion that extends beyond an end of the second electrode in a second direction perpendicular to the first direction, and
the end portion is bent in the first direction and connected to the first current collector plate.

2. The power storage device according to claim 1, wherein
a first protective layer having insulating property is formed on a first surface of the end portion of the first electrode, the first surface being on a bending direction side,
and a portion of the first protective layer extends separately from the end portion at a portion that is connected to the first current collector plate.

3. The power storage device according to claim 2, wherein
each of the first electrode, the second electrode, and the separator has a band shape, and
the first electrode and the second electrode are wound via the separator.

4. The power storage device according to claim 2 or 3, wherein
the first electrode comprises a first core that has a band shape, and a first mixture layer disposed on the first core, and
the second electrode comprises a second core that has a band shape, and a second mixture layer disposed on the second core.

5. The power storage device according to claim 4, wherein
the end portion comprises a first exposed portion formed thereon in which the first mixture layer is not formed such that the first core is exposed, and
the first current collector plate and the first exposed portion are joined.

6. The power storage device according to claim 5, wherein
a second protective layer having insulating property is formed on a second surface of the end portion on a side opposite the first surface.

7. The power storage device according to claim 6, wherein
the end portion comprises a region in which a second protective layer is formed and a region in which the second protective layer is not formed such that the regions are positioned next to each other along an extending direction of the end portion.

8. The power storage device according to claim 5, wherein
the first surface comprises a region in which the first protective layer is thinner or the first protective layer is not formed on a side toward the first mixture layer relative to the region in which the first protective layer is formed.

9. The power storage device according to claim 2, wherein
the first protective layer covers a joint portion of the first current collector plate and the end portion.

10. The power storage device according to claim 1, wherein
the end portion comprises a first bend portion that is bent radially outward, and
the first bend portion is connected to the first current collector plate.

11. The power storage device according to claim 10, wherein
the first electrode comprises a first core that has a band shape, and a first mixture layer disposed on the first core, and
the second electrode comprises a second core that has a band shape, and a second mixture layer disposed on the second core.

12. The power storage device according to claim 11, wherein
the end portion of the first electrode comprises a first exposed portion formed thereon in which the first mixture layer is not formed such that the first core is exposed, and
the first current collector plate and the first exposed portion are joined.

13. The power storage device according to claim 10 or 11, wherein
the power storage device further comprises a second current collector plate electrically connected to the second electrode, and
the second electrode comprises an end portion that extends beyond an end of the second electrode in the second direction, and the end portion of the second electrode is connected to the second current collector plate.

14. The power storage device according to claim 13, wherein
the end portion comprises a second bend portion located farther from the first current collector plate than the first bend portion is in an extending direction of the end portion, and the second bend portion bends radially inward of the electrode assembly.

15. The power storage device according to claim 13, wherein
a surface of the end portion comprises a protective layer having insulating property formed on a side toward the first mixture layer in an extending direction of the end portion.

16. The power storage device according to claim 15, wherein
the end portion comprises a second bend portion that bends radially inward of the electrode assembly and is located farther from the first current collector plate than the first bend portion is in the extending direction of the end portion, and
the second bend portion is formed between the first bend portion and a region in which the protective layer is formed in the extending direction of the end portion.
